# EUROPEAN PATENT APPLICATION

(11) **EP 4 011 791 A1**
(43) Date of publication of application: **15.06.2022**
(21) Application number: 22153285.6
(22) Date of filing: 08.11.2019
(51) Int. Cl.: B65B 41/10, B65B 41/16, B65B 65/02, H02K 15/02, H02K 5/26, H02K 7/14, B65B 65/00, B65B 59/04

(54) **MACHINE FOR THE PRODUCTION OF SMOKING ARTICLES**

(30) Priority: 12.11.2018 IT 201800010246
(62) Divisional of application: 19207917.6
(71) Applicant: G.D S.p.A., 40133 Bologna (IT)
(72) Inventor: SGRIGNUOLI, Vittorio, 40133 Bologna (IT); SARTONI, Massimo, 40133 BOLOGNA (IT); FEDERICI, Luca, deceased (IT)
(74) Representative: Bianciardi, Ezio

(57) **Abstract**

Described is a machine for making smoking articles, comprising a plurality of rollers (20, 20', 30, 30') for transferring and/or processing material for forming and/or making the smoking articles, at least part of the rollers (20, 20') being mounted coaxially with each other and/or on axes (X) which are parallel to each other and supported by a substantially vertical wall (10) of a supporting base, each roller (20, 20') having a respective central support (21, 21'), a cylindrical outer mantle (22, 22') and an internal compartment (23, 23'), interposed between the central shaft (21, 21') and the mantle (22, 22'), characterised in that at least one of the rollers (20, 20') comprises an electric motor (24, 24') housed inside the internal compartment (23, 23') and configured to set the mantle (22, 22') in rotation about the respective axis (X). [Figure 4]

## Description

This invention relates to a machine for packaging articles, in particular smoking articles, comprising a plurality of operating elements for transferring and/or processing material for forming and/or packaging smoking articles, wherein at least a part of the operating elements consists of rollers mounted coaxially to each other and/or on axes parallel to each other.

The invention also relates to a machine for packaging hygiene articles, in particular absorbent articles such as, for example, nappies, a machine for making containers made of multilayer material for liquids or powders, in particular brik packs or capsules or the like, and a machine for packaging food products, in particular sweets or chocolates, using the same operating elements, in particular the same rollers.

It is known, for example in the tobacco sector, that webs are fed continuously by means of trains of rollers defining a feed path. In the specific case of a machine for making filters, the rollers have a particular structure and function when considering a stretching station positioned upstream and/or downstream of the processing station with plasticizing material.

In these prior art machines, the rollers are mounted on a vertical wall forming part of the base of the machine and the rollers are driven by respective electric motors located on the opposite side of the wall. These machines have the problem of being difficult to maintain due to the need to operate on motors positioned on the rear side of the wall, as well as enclosed inside the frame of the machine, and they also require complex changeover operations on account of the need to prepare replacement idle rollers which must be coupled each time to the respective motors. Moreover, these motors, positioned on the rear side of the wall, occupy space which could be dedicated to other purposes, for example to one or more electric control units, or which could be saved to reduce the dimensions of the machine.

In this context, the basic technical purpose of the invention is to provide a packaging device for smoking articles which overcomes the above-mentioned disadvantages of the prior art.

More specifically, the aim of the invention is to provide a machine for packaging smoking articles which is constructionally simple and easy to maintain.

Another aim of the invention is to provide a machine for making smokers' articles which is extremely simple for size changeover. The technical purpose indicated and the aim specified are substantially achieved by a machine for packaging smoking articles comprising the technical features set out in claims 1 to 14.

The invention also relates to a machine for packaging sanitary articles, in particular absorbent articles, a machine for making containers made of multilayer material for liquids and a machine for packaging food products, in particular small products such as chocolates, sweets or the like, comprising the technical features described in claims 15 to 17, respectively.

The invention is described below with reference to the accompanying drawings, which illustrate a non-limiting embodiment of it, in which:

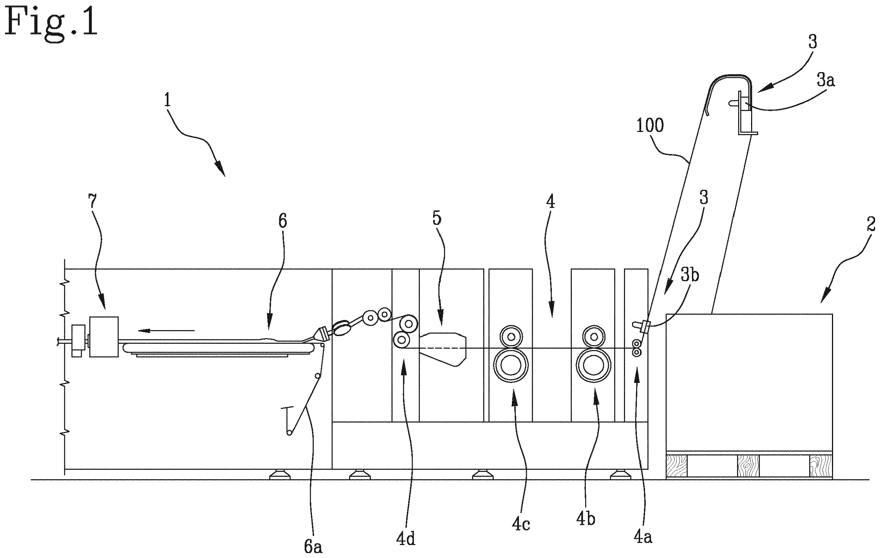

- Figure 1 represents a schematic view of a machine according to this invention;
- Figure 2 shows an operating portion of the machine of Figure 1 in a first configuration, corresponding to an operating condition;
- Figure 3 shows the portion of Figure 2 in a second configuration, corresponding to a non-operating condition;
- Figure 4 is a cross section, along a vertical plane, of the portion of Figure 2 with some parts removed;
- Figure 5 is a perspective cross section view, along a vertical plane, of the portion of Figure 2 with some parts removed;
- Figure 6 shows an enlargement of a first portion of the view of Figure 4;
- Figure 7 is a perspective cross section view of the portion of Figure 6;
- Figure 8 shows an enlargement of a second portion of the view of Figure 4;
- Figure 9 is a perspective cross section view of the portion of Figure 8.

With reference to the accompanying drawings, the numeral 1 denotes in its entirety a machine for the tobacco industry, in particular a machine for processing a filter material starting from a bale of filter material for obtaining a continuous filter rod, suitable for the subsequent separation into filtering segments.

The machine 1, the layout of which is of known type, comprises a station 2 for feeding a web 100 of filter material (acetate) in the form of a compressed bale, at least one successive widening station 3 equipped with widening nozzles 3a, 3b in succession configured for expanding in width the web, a subsequent stretching station 4 equipped with two pre-tensioning rollers 4a, two first tensioning rollers 4b and two second tensioning rollers 4c (the number of rollers of the stretching station 4 could, however, be different), of a subsequent processing station 5 with a plasticizing material if necessary followed by two relaxing rollers 4d, a subsequent station 6 for forming a continuous rod by wrapping with a paper web 6a and a station 7 for cutting the rod in segments.

In particular, the invention relates to operating elements of the machine 1 designed for transferring and/or processing the web 100, and specifically the pairs of rollers 4a, 4b, 4c, 4d which in the case of the machine described are designed for feeding the web 100 and for its processing. For this purpose, each pair of tensioning rollers 4b, 4c (or at least one of the two) is usually defined by a motor-driven roller (which in the accompanying drawings is defined as an upper roller but which could have a different arrangement, for example lower or lateral) with a metallic cylindrical mantle and an idle roller with rubberized mantle (which in the accompanying drawings is defined as lower roller but which could have a different arrangement, for example upper or lateral). Usually, the motor-driven roller is equipped with corrugations along the axis of rotation of the roller to determine, simultaneously with the flattening of the web between the rollers, a separation of the fibres of the web in a direction transversal to the feed direction. According to further variants, the lower rollers may also be made of metal, smooth or provided with respective corrugations.

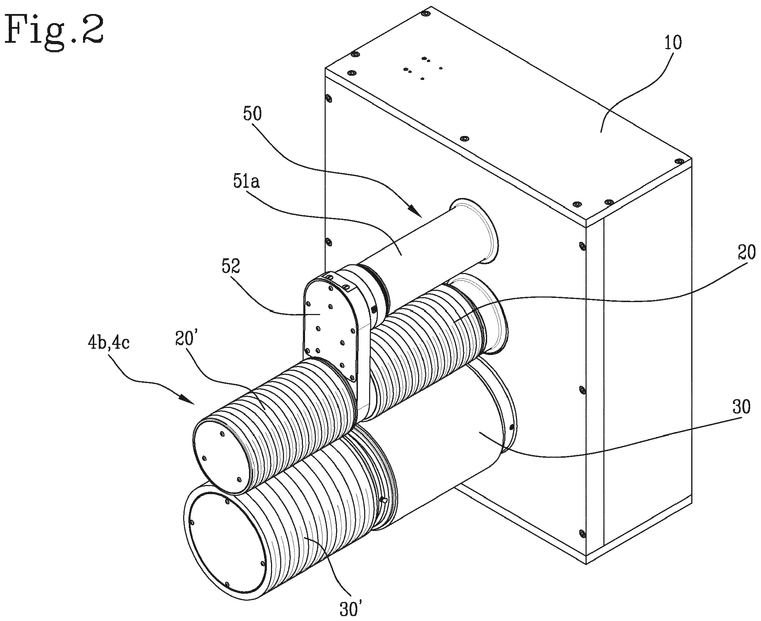

Figures 2 to 9 show technical details of the rollers 4a (or in a similar manner, the rollers 4b) made in accordance with an embodiment of the invention. In particular, Figures 2 to 9 refer to a double line machine, that is to say, configured to operate simultaneously on two webs advancing along paths side by side (or superposed or in any case positioned in mutual vicinity). The invention can also be applied to machines with a single line or with more than two lines without altering the inventive concept.

As shown in Figure 2, two pairs of rollers 4a, in particular a first pair of rollers, or upper rollers, 20, 20' and a second pair of rollers, or lower rollers, 30, 30', are applied to a substantially vertical wall 10 of the machine 1, forming part of the base of the machine 1. As indicated above, according to an embodiment, the upper rollers 20, 20' are motor-driven and equipped with a metallic cylindrical mantle, preferably equipped at least partly with corrugations along the axis of rotation, whilst the lower rollers are preferably idle and equipped with a resilient cylindrical mantle, in particular rubberized.

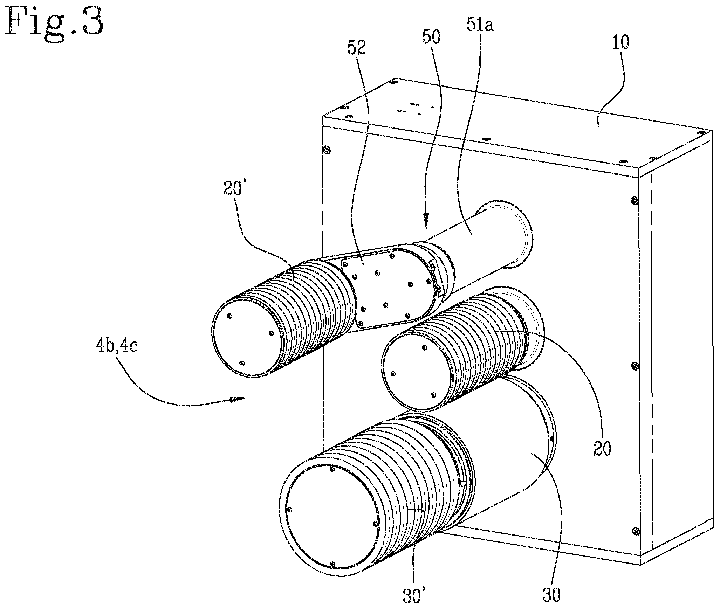

Figure 2 shows the rollers 20, 20', 30, 30' in an operating configuration (with the web not illustrated for clarity of description) whilst Figure 3 shows a non-operating condition, suitable for size changeover and which will be described below.

In more detail, the two upper rollers 20, 20' are positioned coaxially (in the operating configuration of Figure 2) and in particular with their axes of rotation perpendicular to the vertical surface defined by the wall 10. Similarly, the two lower rollers 30, 30' are positioned coaxially with each other and in particular with their axes of rotation perpendicular to the vertical surface defined by the wall 10.

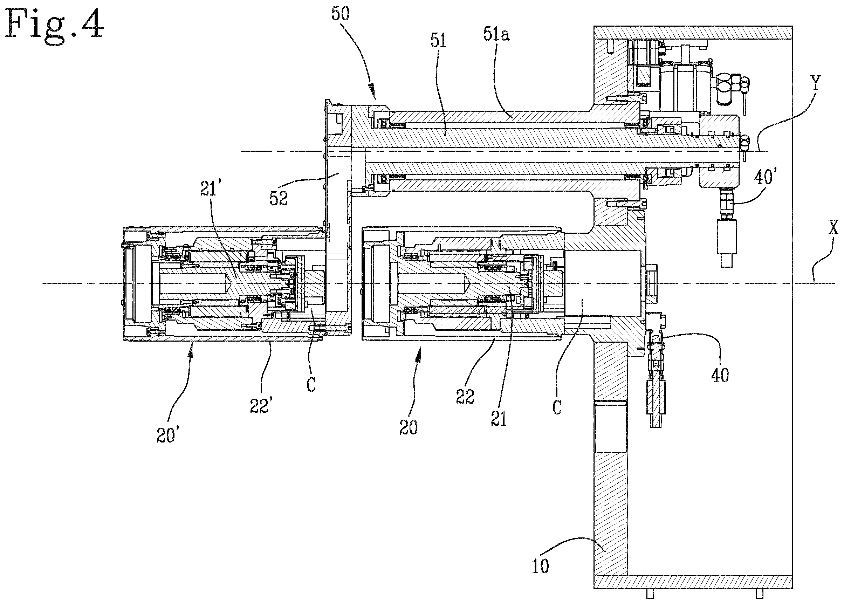

Figures 4 to 9 illustrate in detail the internal structure of the upper rollers 20, 20', to which the inventive concept of the invention applies in particular.

Each upper roller 20, 20' comprises a central support 21, 21', in the form of a shaft and positioned to rotate about a respective axis "X", and an outer cylindrical mantle 22, 22' (equipped at least partly with corrugations) which is also rotatable about the axis of rotation "X" in an integral fashion with the respective shaft 21, 21'.

Between the shaft 21, 21' and the mantle 22, 22' there is an internal compartment 23, 23' inside of which an electric motor 24, 24' is advantageously at least partially positioned, configured for rotating the mantle 22, 22' about the respective axis "X".

Each electric motor 24, 24' comprises an inner rotor 24a, 24a' closer to the axis of rotation "X" and fitted on the central shaft 21, 21', in particular integral with it or fixed to it in a rigid fashion, and an outer stator 24b, 24b' which surrounds the rotor 24a, 24a' and is positioned in a fixed position in accordance with the methods described below. The electric motor 24, 24' is preferably a brushless motor (with permanent magnets).

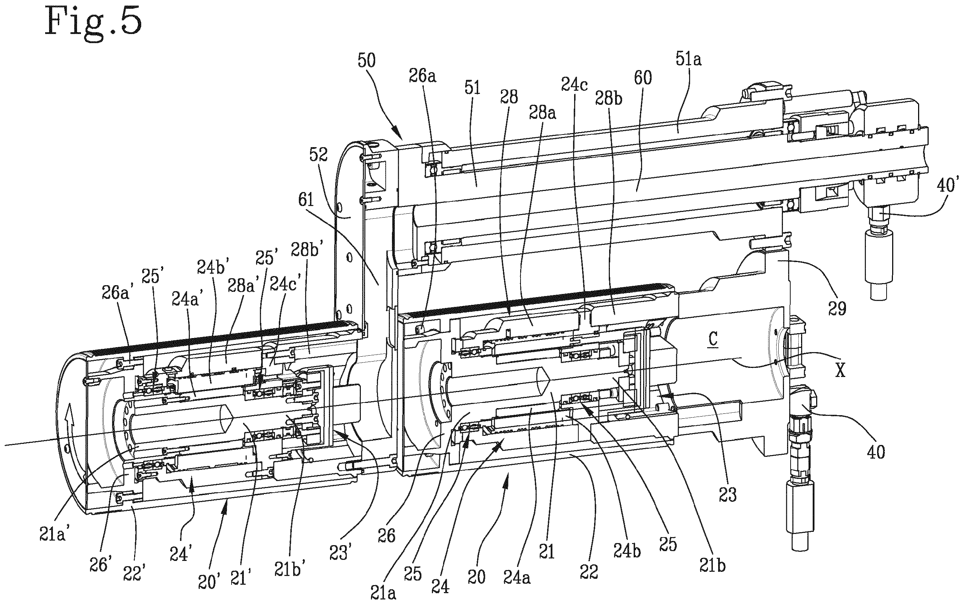

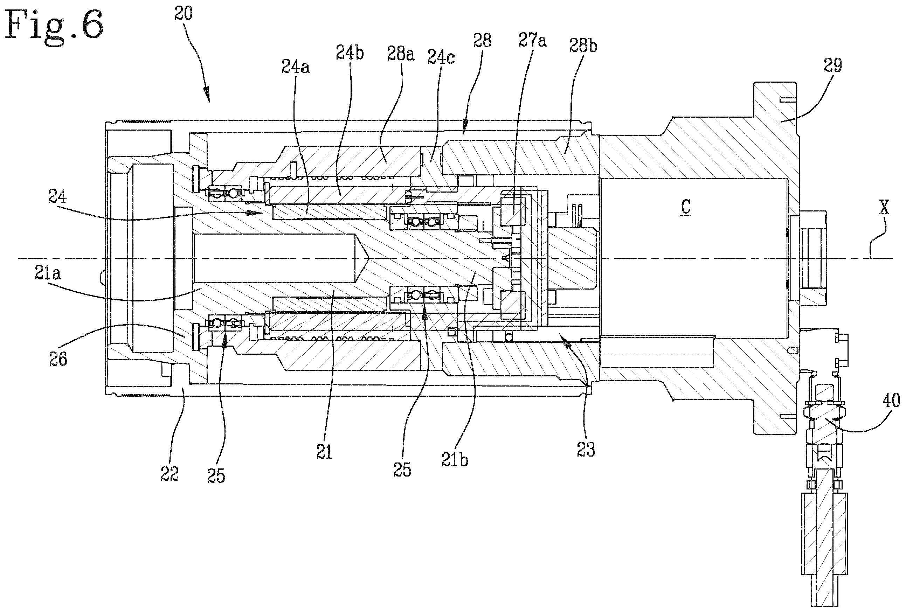

Figure 5, and even more so, the enlarged views of Figures 6 to 9, illustrate the internal structure of the upper rollers 20, 20'.

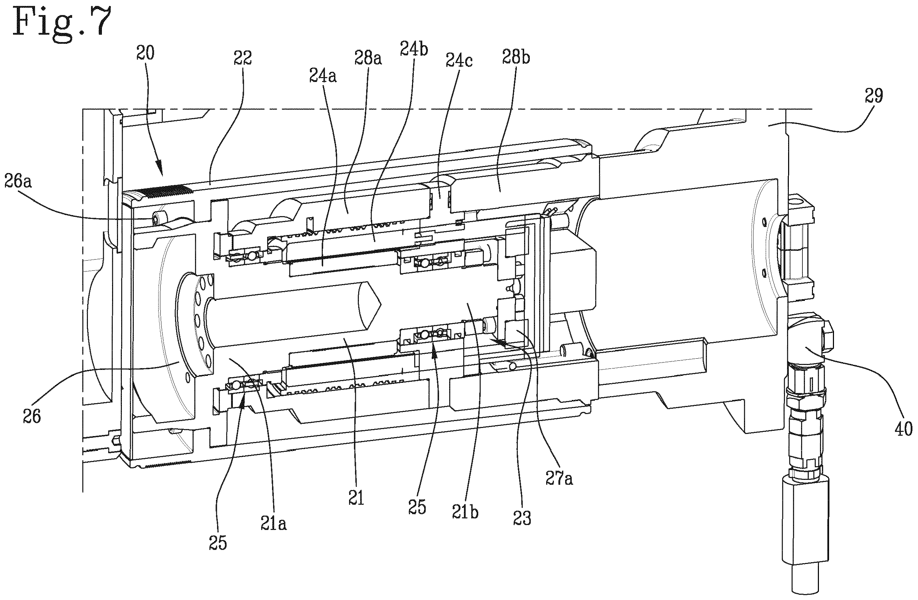

Figures 6 and 7 illustrate in detail the innermost upper roller 20, that is to say, closest to the vertical wall 10 of the machine 1. The roller 20, which is structurally similar to the corresponding outer roller 20' coaxial with it, will now be described in more detail. The same elements of the two rollers 20, 20' are labelled in the drawings with the same number, with the addition of the superscript.

The central shaft 21, kept in a position coaxial with the axis "X" by a pair of bearings 25, extends from a first end 21a opposite the vertical wall 10 and a second end 21b opposite the first end and facing towards the wall 10. Since the roller 20 is mounted in cantilever fashion on the wall 10, the first end 21a of the shaft 21 is free from constraints.

At the first end 21a, the shaft 21 has a connecting portion 26 configured for fixing to the mantle 22 in such a way that the shaft 21 and the mantle 22 are rotationally integral about the axis "X". In particular, the connecting portion 26 is defined by a radial expansion of the shaft 21 away from the axis "X", that is to say, a portion with larger diameter, which defines a flanged portion configured for connection to the mantle 22, in particular using threaded elements 26a inserted in a succession of peripheral holes angularly positioned about the axis "X". The flanged portion also defines a cover for closing the internal compartment 23.

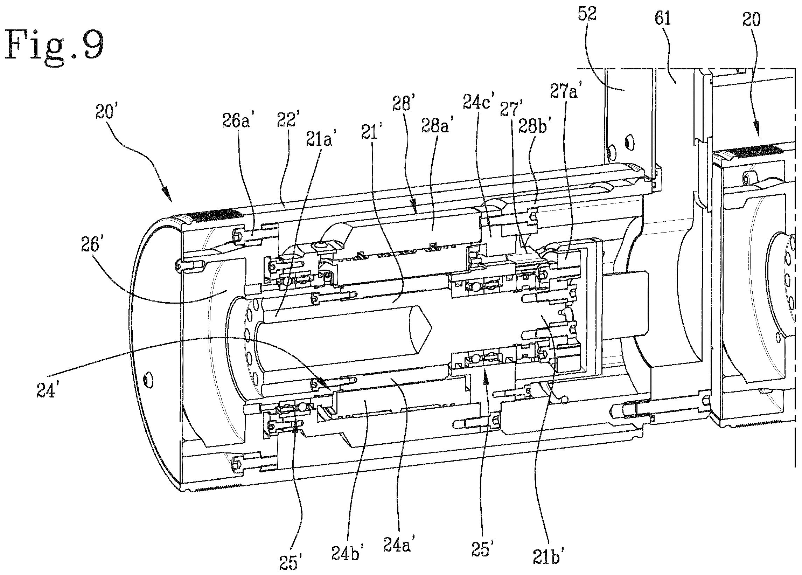

Preferably, as shown in Figure 9 (it is not visible in Figure 7 since it is positioned in an angular position not suitable for displaying it) the shaft 21' of each upper roller 20, 20' has, on the above-mentioned second end 21b', an angular detecting disc 27a' operatively associated with a fixed encoder or resolver 27', facing it for detecting the absolute angular position of the shaft 21' about the axis "X" (as shown in Figure 9).

In order to support the stator 24b in a fixed position and interposed between the rotor 24a and the mantle 22, the stator 24b is mounted on, or integral with, a fixed supporting element 28, in particular shaped as a supporting sleeve, in turn mounted in cantilever fashion on the vertical wall 10 of the machine 1.

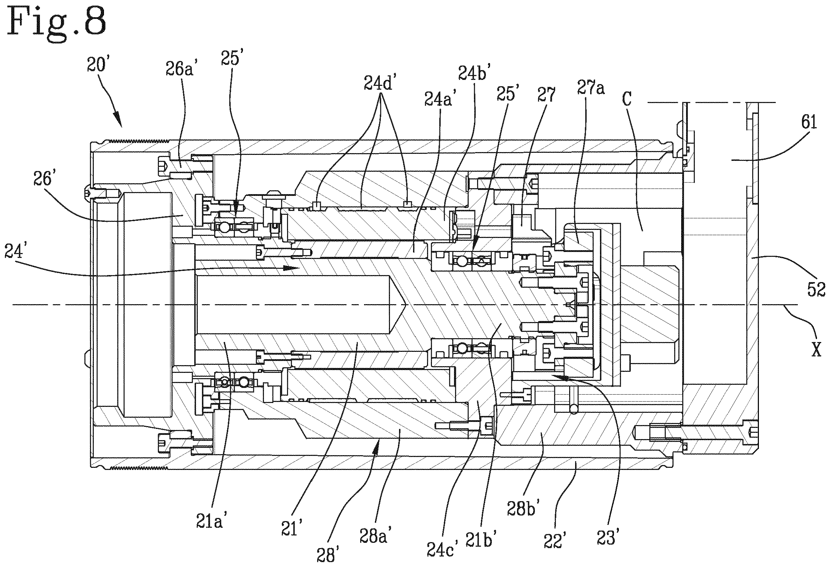

In more detail, the stator 24b has an annular shape and is located in a position radially inside the fixed supporting element 28. This preferably allows, as in the embodiment illustrated in Figures 7 and 8, that the fixed supporting element 28 supports internally at least one of the above-mentioned two bearings 25, in particular the one positioned close to the first end 21a of the central shaft 21. Moreover, the fixed supporting element 28 supports the encoder 27 in a position suitable for detecting the angular position of the detecting disc 27a.

According to the embodiment illustrated in Figures 7 and 8, the fixed supporting element 28 comprises two parts 28a, 28b axially aligned along the axis of rotation "X" and between which is interposed, and fixed to them for example by threaded means, a radial connecting protrusion 24c (having a preferably annular shape) of the stator 24b. The fixed supporting element 28 also has, or is connectable to, a connecting flange 29 fixable in a removable fashion to the vertical wall 10. The connecting flange 29 can be connected to the vertical wall 10 in an adjustable fashion at least in a vertical plane defined by the wall, preferably using threaded means and fastening slots having an elongate shape. In that way, by releasing the threaded elements it is possible to modify the position of the connecting flange 29, and therefore of the entire roller 20, along the wall 10 and then fix it again in the desired position. This advantageously allows a modification of the size being processed on the machine 1 or an adjustment of the thickness of the web 100 or other adjustments.

According to a preferred aspect of the invention, the stator 24b has at least one cooling circuit 24d, in particular using liquid or air, connected or connectable to an external source of fluid. The cooling circuit 24d, which comprises one or more channels 24e (shown more clearly in the view of Figure 8 or 9), extends partly through the fixed supporting element 28 in such a way as to connect the channels 24e to an external source of cooling fluid. Preferably, the cooling fluid is air and the cooling circuit 24d leads, from the side facing towards the wall 10, into a head chamber "C", formed inside the fixed supporting element 28. One or more suitable connectors 40 connect the cooling circuit 24d to the external source.

As described above, the upper rollers 20, 20' are made in the same way.

Possible different elements are linked to the fact that the inner roller 20 is applied to the vertical wall 10 whilst the outer roller 20' is mounted on a supporting arm 50 above the inner roller 20.

In more detail, the supporting arm 50 has a first portion 51, mounted in a cantilever fashion on the vertical wall 10 and extending along an axis "Y" parallel to the axis "X" of the upper rollers 20, 20', and a second portion 52 perpendicular to the first portion 51 and having a first end connected to the first portion 51 and a second end supporting in a cantilever fashion the outer roller 20'. The second end of the second portion 51 of the arm 50 is positioned in a zone axially interposed between the two rollers 20, 20' and is separated (even though at a reduced distance to reduce the overall dimensions) from the free end of the inner roller 20.

The two portions 51, 52 of the arm 50 are preferably rigidly connected to the second portion 52 which remains parallel to the vertical plane defined by the vertical wall 10. Moreover, the first portion 51 is rotatable about the respective axis "Y" in such a way as to move the outer roller 20' in the above-mentioned plane parallel to the vertical plane of the wall 10 between an operating position (Figure 2), wherein the two upper rollers 20, 20' are aligned coaxially with each other, and a non-operating position (Figure 3) wherein the arm 50 is rotated and the two upper rollers 20, 20' are misaligned, for example to define a size changeover condition of the machine 1. Preferably, outside the first portion 51 there is an outer jacket 51a supporting rotatably, inside it, the first portion 51 for example by ball bearings.

As a result, the two upper rollers 20, 20' are independent of each other both at structural level (the rollers are not connected to each other in any way nor supported on the vertical wall 10 by means of elements in common) and operatively, since they are equipped with individual and independent electric motors.

Moreover, with reference to the outer roller 20', suitable conduits (illustrated by means of the stretches 60, 61 in Figure 5, wherein a first stretch 60 is inside the first portion 51 of the arm 50 and a second stretch 61 is inside the second portion 52 of the arm 50) transmit the cooling fluid from the respective source to the stator 24', also by means of one or more suitable connectors 40'. Similarly, the arm 50 has or supports electrical connections (not illustrated) for powering the electric motor 23'.

Although the invention is in this context described with reference to the above-mentioned machine, it may also be extended to other machines for the tobacco industry where it uses (or is suitable to use) rollers of the type described above, both with one line and multi-line, for example (but without limiting the scope of the invention) machines for the treatment of crimped tobacco webs or machines for making packets, in particular in the field of rollers for feeding continuous webs of paper or other material.

The invention may also be extended to machines not belonging to the tobacco sector but in any case using rollers or pairs of rollers for the transfer and/or processing of material for forming and/or packaging products, for example machines for packaging sanitary articles, wherein the rollers can be used, for example, for making or for conveying a continuous web of absorbent and/or multilayer material, or machines for making containers made of multilayer material for liquids, in particular brik packs or the like, wherein the rollers can be used, for example, for making or conveying a continuous multilayer web, or a machine for packaging food products, in particular small products such as chocolates, sweets or the like, wherein the rollers can, for example, be used for making or conveying a continuous web for packing single products or groups of products.

Moreover, the invention may also extend to the lower rollers 30, 30' (or in any case those described above as idle), which can also be equipped with the same internal drive unit such as the upper rollers, where desired.

Moreover, in accordance with a different embodiment not illustrated, the electric motor 24, 24' may be positioned with a relative fixed inner part (stator) fixed to the central support 21, 21', which therefore acts as a pin instead of a shaft, and a rotor outside and coaxial with the central pin 21, 21' integral with the mantle 22, 22', for example integral with the inner surface of the mantle 22, 22'. In this configuration the outer rotor can be mounted directly, by means of bearings, on the fixed inner part (stator), the latter defining the support of the entire roller 10, 10' relative to the vertical wall 10. The present invention achieves the preset aims, overcoming the disadvantages of the prior art.

The individual drive of each roller, obtained by means of a respective electric motor in the inner compartment of each roller, allows a very fast fitting and removal of the roller in the case of maintenance or size changeover.

Moreover, this considerably increases the constructional simplicity of the machine, which in its base structure no longer requires the anchoring of the motors to the vertical wall.

Lastly, the adjustability of the rollers and their versatility both in the positioning and in the switching to a non-operating or size changeover position is evident.

## Claims

1. A machine for making smoking articles, comprising a plurality of operating means (20, 20', 30, 30') for transferring and/or processing material for forming and/or making the smoking articles, at least some of the operating means (20, 20') being embodied by rollers (20, 20') rotatable about respective axes (X), mounted coaxially with each other and/or on axes (X) which are parallel to each other, the rollers (20, 20') being supported by a substantially vertical wall (10) of a supporting base, each roller (20, 20') having a respective central support (21, 21'), a cylindrical outer mantle (22, 22') and an internal compartment (23, 23'), interposed between the central support (21, 21') and the mantle (22, 22'), **characterized in that** at least one of the rollers (20, 20') comprises an electric motor (24, 24') mounted inside the internal compartment (23, 23') and configured to set the mantle (22, 22') in rotation about the respective axis (X).

2. The machine according to claim 1, wherein the central support (21, 21') in the roller (20, 20') is in the form of a shaft which is rotatable about the axis (X) and as one with the mantle (22, 22') about the axis (X), and wherein the rotor (24a, 24a') of the electric motor (24, 24') is rotatably integral with the shaft (21, 21'), in particular fixed to the shaft (21, 21') or integral with the shaft (21, 21').

3. The machine according to claim 2, wherein the stator (24b, 24b') of the electric motor (24, 24') in the roller (20, 20') is fixed and interposed between the rotor (24a, 24a') and the mantle (22, 22') and wherein the stator (24b, 24b') is mounted on, or is integral with, a fixed supporting element (28), preferably a supporting sleeve, which is in turn mounted in cantilevered fashion to the vertical wall (10) of the supporting base.

4. The machine according to claim 3, wherein the fixed supporting element (28) is provided with, or is connectable to, a connecting flange (29) which can be removably fixed to the vertical wall (10), and wherein the connecting flange (29) is connectable to the vertical wall (10) adjustably at least in a vertical plane defined by the wall (10), preferably by threaded means and fastening slots having an elongated shape.

5. The machine according to claim 3 or 4, further comprising at least one cooling circuit (24d, 24d'), specifically a liquid or air cooling circuit, which is connected or connectable to an external fluid source and is configured to cool the motor (24, 24') and/or the entire roller (10, 10'), the cooling circuit (24d, 24d') preferably extending at least partly through the stator (24b, 24b') of the electric motor (24, 24').

6. The machine according to claim 5, wherein the cooling circuit (24d, 24d') extends partly through the fixed supporting element (28).

7. The machine according to any one of claims 2 to 6, wherein the shaft (21, 21') in the roller (20, 20') has, at its first end (21a, 21a') a connecting portion (26, 26') configured for fastening to the mantle (22, 22'); the shaft (21, 21') preferably having, at its opposite end (21b, 21b') an angular detecting disc (27a, 27a') for an encoder (27, 27').

8. The machine according to claim 7, wherein the connecting portion (26, 26') is defined by a radial expansion of the first end (21a, 21a') of the shaft (21, 21') and is configured as a flanged portion for connection to the mantle (22, 22'), specifically by threaded means; the flanged portion defining a cover for closing the internal compartment (23, 23').

9. The machine according to claim 7 or 8, wherein the roller (20, 20') further comprises, inside the internal compartment (23, 23'), an angular encoder (27, 27') facing the angular detecting disc (27a, 27a') and preferably disposed in the proximity of the stator (24b, 24b') of the electric motor (24, 24').

10. The machine according to any one of the preceding claims, wherein the electric motor (24, 24') is a brushless motor.

11. The machine according to claim 1 or 10, wherein the central support (21, 21') in the roller (20, 20') is in the form of a fixed pin disposed on the axis (X) and wherein the electric motor (24, 24') has an internal stator which is fixed to or integral with the fixed pin and an external rotor disposed round the internal stator and rotatable about the axis (X), and wherein the external rotor is fixed to the mantle (22, 22'), preferably to an inside surface of the mantle (22, 22'), or is integral with the mantle (22, 22').

12. The machine according to any one of the preceding claims, wherein the roller (20, 20') is a stretching roller (4a, 4b, 4c) of a machine for processing a strip of filter material (100) and acts in conjunction with a matching counter-roller (30, 30') which is preferably idle.

13. The machine according to any one of the preceding claims, configured as a twin-line machine and wherein at least some of the operating means (20, 20') are embodied by pairs of rollers (20, 20') wherein the rollers (20, 20') of each pair are mounted axially side by side along a common axis of rotation (X), wherein a first roller (20) of each pair of rollers is cantilevered, preferably directly, to the vertical wall (10) and wherein the second roller (20') of the pair of rollers, disposed further away from the vertical wall (10), is supported by the vertical wall (10) by means of a supporting arm (50) surmounting the first roller (20) of the pair of rollers.

14. The machine according to claim 13, wherein the supporting arm (50) has a first portion (51) which is cantilevered to the vertical wall (10) and a second portion (52) to which the second roller (20') is cantilevered, and wherein the second portion (52) of the supporting arm (50) has one end on which the second roller (20') is applied and which is interposed between the first and the second roller (20, 20') of the pair of rollers.

15. A machine for making sanitary articles, specifically absorbent articles such as nappies, for example, comprising a plurality of operating means for transferring and/or processing material for forming and/or making the sanitary articles, at least some of the operating means (20, 20') being embodied by rollers (20, 20') which are mounted coaxially with each other and/or on parallel axes (X) and which are supported by a substantially vertical wall (10) of a supporting base, each roller (20, 20') having a respective central support (21, 21'), a cylindrical outer mantle (22, 22') and an internal compartment (23, 23'), interposed between the central support (21, 21') and the mantle (22, 22'), **characterized in that** at least one of the rollers (20, 20') comprises an electric motor (24, 24') mounted inside the internal compartment (23, 23') and configured to set the mantle (22, 22') in rotation about the respective axis (X).

16. A machine for making containers of multilayer material for liquids or powders, specifically brik packs, capsules or the like, comprising a plurality of operating means for transferring and/or processing material for forming and/or making the containers, at least some of the operating means (20, 20') being embodied by rollers (20, 20') which are mounted coaxially with each other and/or on parallel axes (X) and which are supported by a substantially vertical wall (10) of a supporting base, each roller (20, 20') having a respective central support (21, 21'), a cylindrical outer mantle (22, 22') and an internal compartment (23, 23'), interposed between the central support (21, 21') and the mantle (22, 22'), **characterized in that** at least one of the rollers (20, 20') comprises an electric motor (24, 24') mounted inside the internal compartment (23, 23') and configured to set the mantle (22, 22') in rotation about the respective axis (X).

17. A machine for packaging food products, specifically small products such as chocolates, sweets or the like, comprising a plurality of operating means for transferring and/or processing material for making up and/or packaging the food products, at least some of the operating means (20, 20') being embodied by rollers (20, 20') which are mounted coaxially with each other and/or on parallel axes (X) and which are supported by a substantially vertical wall (10) of a supporting base, each roller (20, 20') having a respective central support (21, 21'), a cylindrical outer mantle (22, 22') and an internal compartment (23, 23'), interposed between the central support (21, 21') and the mantle (22, 22'), **characterized in that** at least one of the rollers (20, 20') comprises an electric motor (24, 24') mounted inside the internal compartment (23, 23') and configured to set the mantle (22, 22') in rotation about the respective axis (X).
